# EUROPÄISCHE PATENTANMELDUNG

(11) **EP 4 691 605 A1**
(43) Veröffentlichungstag der Anmeldung: **11.02.2026**
(21) Anmeldenummer: 24193894.3
(22) Anmeldetag: 09.08.2024
(51) Int. Cl.: B01D 53/86, B01J 35/56, B01J 19/24, B29C 64/10, B33Y 10/00, B33Y 80/00, B01J 23/34, B01J 23/42, B01J 23/50, B01J 37/00

(54) **VERFAHREN ZUR HERSTELLUNG EINES KATALYSATOR-FILTERS, KATALYSATOR-FILTER, VERWENDUNG EINES KATALYSATOR-FILTERS, LUFTAUFBEREITUNGSVORRICHTUNG, DIE EINEN KATALYSATOR-FILTER AUFWEIST**

(71) Anmelder: SKAN Deutschland GmbH, 02827 Görlitz (DE)
(72) Erfinder: EGGERT, Benjamin, 02763 Zittau (DE)
(74) Vertreter: Mertzlufft-Paufler, Cornelius

(57) **Zusammenfassung**

Erfindungsgemäß wird bei einem Verfahren zur Herstellung einer Katalysator-Anordnung (1), die ein Trägergerüst (2) aufweist, wobei die Katalysator-Anordnung (1) zum Abbau von Dekontaminationsrückständen (3), insbesondere von Wasserstoffperoxid (4), in einem kontrollierten Containment (5), insbesondere einem Isolator (6), ausgebildet ist, vorgeschlagen, dass das Trägergerüst (2) der Katalysator-Anordnung (1) additiv gefertigt wird, wobei das Trägergerüst (2) aus einem mit einem Haftvermittler (7) versehenen, insbesondere homogen und/oder gleichmäßig vermischten Trägermaterial (8) besteht, wobei das Trägergerüst (2) der Katalysator-Anordnung (1) aus vorzugsweise linearen Filamentstrukturen (10) bestehenden Schichten (11, 11') gebildet ist, wobei jede Schicht (11) einer nächsten Schicht (11') kreuzend überlagert (15) ist und wobei die Katalysator-Anordnung (1) insbesondere als Bestandteil einer Luftaufbereitungsvorrichtung (22) ausgebildet ist (Fig. 1).

## Beschreibung

Die Erfindung betrifft ein Verfahren zur Herstellung einer Katalysator-Anordnung, die ein Trägergerüst aufweist, wobei die Katalysator-Anordnung zum Abbau von Dekontaminationsrückständen, insbesondere von Wasserstoffperoxid und/oder Ozon, in einem kontrollierten Containment, insbesondere einem Isolator, ausgebildet ist.

Die Erfindung betrifft ferner eine Katalysator-Anordnung, die ein vorzugsweise mehrschichtiges Trägergerüst aufweist, welches aus einem mit einem Haftvermittler versehenen, insbesondere vermischten, Trägermaterial und einem auf dem Trägermaterial aufgebrachten Katalysator gebildet ist.

Die Erfindung betrifft darüber hinaus eine Verwendung einer bereits beschriebenen Katalysator-Anordnung zum Abbau von Dekontaminationsrückständen, insbesondere zum Abbau von Wasserstoffperoxid, innerhalb eines kontrollierten Containments, insbesondere innerhalb eines Isolators, während eines Umluft- und/oder Abluftverfahrens.

Die Erfindung betrifft schließlich eine Luftaufbereitungsvorrichtung, die eine bereits beschriebene Katalysator-Anordnung aufweist.

Katalysator-Anordnung und diese herstellenden Verfahren sind aus der Praxis bekannt. Beispielsweise werden Katalysatoren zur Gasreinigung oder Gasaufbereitung verwendet.

Der Erfindung liegt die Aufgabe zugrunde, die Herstellung einer Katalysator-Anordnung für kontrollierte Containments, insbesondere für Isolatoren, und somit beispielsweise für geschützte Räume für die Manipulation von Medikamenten, zu vereinfachen.

Zur Lösung der genannten Aufgabe sind erfindungsgemäß die Merkmale des Anspruchs 1 vorgesehen. Insbesondere wird somit zur Lösung der genannten Aufgabe bei einem Verfahren zur Herstellung einer Katalysator-Anordnung der eingangs beschriebenen Art erfindungsgemäß vorgeschlagen, dass das Trägergerüst der Katalysator-Anordnung durch ein mit einem Haftvermittler versehenen, insbesondere vermischten, Trägermaterial additiv gefertigt wird.

Das kontrollierte Containment kann dabei beispielsweise eine kontrollierte Umgebung, insbesondere ein Isolator, sein, in welchem vorzugsweise eine Manipulation von Medikamenten durchgeführt wird. In solchen Containments ist es essenziell, dass diese entsprechende Hygieneanforderungen erfüllen, um eine Kontamination des Medikaments verhindern zu können. Hierzu werden diese Containments mithilfe von Dekontaminationsmitteln vor- und nach der Manipulation des Medikaments dekontaminiert. Um jedoch ebenso eine Reaktion des in dem Containment zu manipulierenden Produkts mit dem Dekontaminationsmittel zu vermeiden, wird dieses Dekontaminationsmittel insbesondere im Rahmen von Umluft- und/oder Abluftverfahren nach einem erfolgten Dekontaminationsschritt über die entsprechende Katalysator-Anordnung geleitet und durch die chemisch aktive Oberfläche der Katalysator-Anordnung zersetzt. Dies hat den Vorteil, dass die (dekontaminationsmittelfreie) Abluft gefahrenlos in die Umgebung, in welcher sich möglicherweise Personen aufhalten, abgegeben werden kann und/oder dass im Abluftbereich nicht dekontamintationsmittelbeständige Materialien eingesetzt werden müssen.

Diese Katalysator-Anordnung besteht aus einem Trägergerüst, welches wiederum aus einem im Rahmen eines additiven Verfahrens bearbeitbaren Trägermaterial besteht, das mit dem Haftvermittler versehen, insbesondere vermischt, ist. Dies resultiert vorteilhafterweise in einer begünstigten Anbindung einer auf das Trägermaterial der Trägerstruktur aufzubringenden Katalysatorschicht.

Der Haftvermittler kann beispielsweise dem Material einer , beispielsweise der bereits erwähnten, nachfolgend auf dem Trägergerüst aufgebrachten Katalysatorbeschichtung entsprechen. Ferner können als Haftvermittler beispielsweise, zusätzlich oder alternativ, Substanzen eingesetzt werden, die insbesondere eine Oberflächenrauigkeit und/oder Abriebskräfte für eine Beschichtung des Trägermaterials erhöhen, beispielsweise durch keramische und/oder mineralische und/oder metallische Partikel dergleichen rauen Strukturen. Der Haftvermittler kann dabei beispielsweise ein Metall (z.B. Platin), ein Metalloxid, ein Übergangsmetalloxid, eine metallorganische Verbindung und/oder eine metallorganische Gerüstverbindung, insbesondere ein Manganoxid, beispielsweise ein Mangandioxid, sein oder aufweisen.

Als additive Fertigungsverfahren können sämtliche bereits bekannte additive Fertigungsverfahren in Betracht gezogen werden, wie beispielsweise 3D-Druckverfahren und/oder badbasierte und/oder photolithografische Verfahren.

Bei einer weiteren vorteilhaften Ausgestaltung der Erfindung kann vorgesehen sein, dass eine Verbindung zwischen Haftvermittler und Trägermaterial homogen und/oder gleichmäßig ist.

Dabei kann beispielsweise vorgesehen sein, dass der Haftvermittler dem Trägermaterial homogen und/oder gleichmäßig beigemischt wird. Besonders vorteilhaft kann somit insbesondere erreicht werden, dass der Haftvermittler nicht an einer Oberfläche eines beispielsweise extrudierten Filaments des Trägergerüsts verbleibt.

Insbesondere kann dabei vorgesehen sein, dass die Verbindung stoffschlüssig ist. Besonders vorteilhaft kann somit beispielsweise verhindert werden, dass sich der Haftvermittler von dem Trägermaterial ablöst.

Bei einer weiteren vorteilhaften Ausgestaltung der Erfindung kann vorgesehen sein, dass der Haftvermittler dem Trägermaterial vor dem additiven Verfahren beigegeben wird. Dies ermöglicht eine Aufbringung im selben Verfahrensschritt wie die additive Fertigung und/oder in einem homogenen Material.

Alternativ oder zusätzlich kann vorgesehen sein, dass der Haftvermittler dem Trägermaterial während dem additiven Verfahren beigegeben wird. Dies ermöglicht beispielsweise eine separate Zuführung des Haftvermittlers und des Trägermaterials. Eine Vorbehandlung des Trägermaterials ist verzichtbar.

Da im Rahmen der additiven Fertigung, beispielsweise im Schmelzschichtdruckverfahren (Fused Deposition Modeling, Fused Filament Fabrication) und Selektivem-Lasersinter-Verfahren (Selective Laser Sintering) das Trägermaterial erhitzt und beispielsweise im Resindruckverfahren (Stereolitography, Digital Light Processing) das Trägermaterial polymerisiert wird, kann durch ein Beigeben des Haftvermittlers vor- und/oder während des additiven Verfahrens beispielsweise ein gemeinsames Verschmelzen beider Komponenten erreicht und eine stoffschlüssige Verbindung begünstigt werden, sodass beispielsweise ein durch das additive Verfahren hergestelltes Filament bereits beide Komponenten, vorzugsweise homogen und/oder gleichmäßig, enthält.

Eine weitere vorteilhafte Ausgestaltung der Erfindung kann vorsehen, dass die additive Fertigung, durch welches das Trägergerüst gebildet wird, ein Schmelzschichtdruckverfahren und/oder ein Resindruck- und/oder ein Selektives-Lasersinter-Verfahrenist.

Aufgrund der räumlichen Ausgestaltung der Containments bieten Schmelzschichtdruckverfahren den Vorteil, dass sich hiermit Trägerstrukturen mit großen Querschnitten problemlos herstellen lassen. Resindruckverfahren bieten hingegen den Vorteil, dass Schichten schneller und detaillierter hergestellt werden können und somit ein Drucken von feinen Strukturen ermöglicht werden kann.

Eine weitere vorteilhafte Ausgestaltung der Erfindung kann vorsehen, dass das Trägermaterial nach der additiven Fertigung mit einem Katalysator beschichtet wird.

Über die aufgebrachte Katalysatorbeschichtung können somit überaus vorteilhaft die Dekontaminationsrückstände des Containments chemisch abgebaut werden, sobald diese das mit dem Katalysator beschichteten Trägergerüst kontaktieren. Der Katalysator kann dabei beispielsweise ein Metall (Platin), ein Metalloxid, ein Übergangsmetalloxid, eine metallorganische Verbindung und/oder eine metallorganische Gerüstverbindung, insbesondere ein Manganoxid, beispielsweise ein Mangandioxid, sein oder aufweisen. Darüber hinaus können beispielsweise auch Platin- oder Silberverbindungen verwendet werden.

Bei einer weiteren vorteilhaften Ausgestaltung kann vorgesehen sein, dass der Haftvermittler stoffschlüssig mit einem, beispielsweise dem bereits erwähnten, Katalysator verbunden wird.

Besonders vorteilhaft kann hierdurch beispielsweise eine homogene und unlösbare Verbindung zwischen Katalysator und Haftvermittler erreicht werden.

Bei einer weiteren vorteilhaften Ausgestaltung der Erfindung kann vorgesehen sein, dass das Trägergerüst während der additiven Fertigung mehrschichtig durch lineare Filamentstrukturen des Trägermaterials gebildet wird, insbesondere wobei wenigstens zwei Schichten gegeneinander versetzt aufgebracht werden und/oder jede Schicht zueinander und/oder zumindest zu einer vorhergehenden und/oder nachfolgenden Schicht versetzt ausgebracht wird.

Dabei kann beispielsweise vorgesehen sein, dass eine erste Schicht zu einer nächsten Schicht versetzt oder zumindest zu wenigstens einer davor aufgebrachten Schicht versetzt ist.

Im Rahmen des weiter oben beschriebenen Abluft- und/oder Umluftverfahrens strömt durch die Katalysator-Anordnung ein mit dem Dekontaminationsmittel versetzter Fluidstrom, insbesondere ein Luftstrom. Aufgrund des auf der Trägerstruktur aufgebrachten Katalysators kann das Dekontaminationsmittel bei Kontakt mit dem Katalysator sodann chemisch abgebaut werden. Somit ist es, beispielsweise zum Abbau des Dekontaminationsmittels innerhalb des Containments wichtig, eine möglichst hohe Kontaktdichte zwischen dem Fluidstrom und dem Katalysator realisieren zu können. Durch eine solche mehrschichtige und versetzte Struktur des Trägergerüsts kann demnach überaus vorteilhaft ein möglichst hoher Oberflächenkontakt zwischen dem Fluidstrom und dem auf der Trägerstruktur aufgebrachten Katalysator erreicht werden.

Dabei kann beispielsweise vorgesehen sein, dass zwischen fein extrudierten Filamentstrukturen von beispielsweise 0,4 mm Poren von beispielsweise 0,2 mm zwischen den Filamentstrukturen während des Extrusionsprozesses erreicht werden. Besonders günstig kann hier beispielsweise eine Luftdurchlässigkeit von 50% sein.

Überaus vorteilhaft können beispielsweise mittels Resindruck auch deutlich kleinere und/oder detailliertere Strukturen gefertigt werden, wodurch sich wiederum die Kontaktfläche erhöhen lässt.

Weiterhin kann vorgesehen sein, dass die Filamentstrukturen beispielsweise eine Schichthöhe von 0,1 mm bis 0,2 mm aufweisen, so dass dann vorzugsweise 10 bis 20 Schichten übereinandergestapelt werden können. So kann beispielsweise die Porosität simuliert werden.

Bei einer weiteren vorteilhaften Ausgestaltung kann vorgesehen sein, dass eine Oberfläche des Trägermaterials nach der Fertigung chemisch so behandelt wird, dass der Haftvermittler, der dem Trägermaterial beigegeben ist, freigelegt wird.

Dabei kann beispielsweise vorgesehen sein, dass die Oberfläche des additiv gefertigten und mit dem Haftvermittler versehenen Trägergerüsts beispielsweise durch Ätzen behandelt wird, um den Haftvermittler freizulegen. Besonders vorteilhaft können somit Kontaktpunkte für die Katalysatorbeschichtung erlangt und eine gute Anhaftung der Katalysatorbeschichtung generiert werden.

Alternativ oder zusätzlich sind zur Lösung der genannten Aufgabe erfindungsgemäß die Merkmale nach Anspruch 8 vorgesehen. Insbesondere wird somit erfindungsgemäß vorgeschlagen, dass zur Einstellung einer gewünschten Abbaurate und/oder eines Druckverlusts eines die Dekontaminationsrückstände enthaltenden und die Katalysator-Anordnung passierenden Fluidstroms ein Maß für wenigstens eine Ebene und/oder wenigstens eine Masche individuell gewählt wird.

Besonders vorteilhaft kann somit beispielsweise eine Anzahl und/oder eine Höhe von Ebenen, ein Versatz einer gleichgerichteten Masche, eine Maschenbreite und/oder ein Maschenabstand je nach Anwendungsfall variiert werden. Da diese Parameter insbesondere mit einer Kanalanzahl, einer Kanalweite und/oder einer Kanallänge korrelieren, kann hierüber die gewünschte Abbaurate und/oder der Druckverlust eingestellt werden.

Alternativ oder zusätzlich sind zur Lösung der genannten Aufgabe die Merkmale des Anspruchs 7 vorgesehen. Hierbei wird erfindungsgemäß vorgeschlagen, dass eine, eine Filterwirkung und/oder katalytisch bewirkende Schicht, in einem additiven Verfahren hergestellt wird, wobei wenigstens ein Knickbereich ausgebildet wird und wobei die Schicht in dem Knickbereich nach dem additiven Verfahren geknickt wird. Somit sind auf einfache Weise dreidimensionale Anordnungen herstellbar, insbesondere ohne dass eine Erstreckung in einer dritte Dimension in einen 3D-Drucker passen muss.

Der Knickbereich kann dabei beispielsweise von einem Falz gebildet sein. Dabei kann beispielsweise vorgesehen sein, dass wenigstens zwei Schichten durch den Knickbereich, beispielsweise Falz, additiv gefertigt werden, wobei die Schichten anschließend derart gefaltet werden können, dass sich ein, hier zweischichtiges, Trägergerüst bildet. Dies kann sich auf eine Vielzahl weiterer Schichten erstrecken. Der Knickbereich kann somit beispielsweise direkt mit den Schichten mitgedruckt werden, beispielsweise im Rahmen eines, beispielsweise des bereits erwähnten Schmelzschichtdruckverfahrens und/oder Resindruckverfahrens und/oder Selektivem-Lasersinter-Verfahrens.

Es sind so einfach Lamellen- oder Faltenanordnungen für Katalysatoren und/oder Filter ausbildbar. Somit ist eine effektive Katalysator- und/oder Filterfläche auf einfache Weise größer, insbesondere deutlich größer, als ein lichter Strömungsquerschnitt, in dem der Katalysator und/oder Filter eingebaut ist oder wird, ausbildbar.

Besonders günstig ist es, wenn der Knickbereich, insbesondere nach Art einer Falzlinie, sich über die gesamte Schicht erstreckt.

Günstig ist es, wenn mehrere vorzugsweise parallel oder längs zueinander ausgerichtete Knickbereiche ausgebildet werden. Diese können dann beispielsweise alternierend als Berg- und Talfalten geknickt werden. Somit ist ein Z-förmiges Profil bildbar.

Alternativ sind die Knickbereiche auch alle in derselben Richtung (als Bergfalten oder als Talfalten) ausbildbar. Es sind somit auch auf einfache Weise Katalysator- und/oder Filterpatronen mit polygonaler Grundform ausbildbar, insbesondere wenn die Schicht durch die Knickungen umlaufend schließt.

Es sind auch Mischformen mit beliebigen Abfolgen von Bergfalten und Talfalten ausbildbar, je nach gewünschtem Anwendungsfall.

Allgemein kann eine Bergfalte beispielsweise als eine Falte beschrieben werden, bei der der Knickbereich einem Betrachter am nächsten zugewandt ist (der Betrachter sieht einen Berg), während eine Talfalte beispielsweise als eine Falte beschrieben werden kann, die vom Betrachter entfernt angeordnet ist (der Betrachter sieht ein Tal). Tal- und Bergfalten können alternativ oder zusätzlich durch unterschiedliche Vorzeichen einer Krümmung in ihrem jeweiligen Profil charakterisierbar sein.

Besonders vorteilhaft kann das Trägergerüst somit beispielsweise in einer gesamten Länge additiv gefertigt, beispielsweise gedruckt, werden, wobei anschließend die verschiedenen Schichten umgeklappt beziehungsweise umgeknickt werden, wodurch eine mehrlagige Katalysator-Anordnung entsteht.

Ferner kann hierdurch besonders vorteilhaft auf einfache Weise ein Lamellenfilter im additiven Verfahren hergestellt werden und darüber hinaus eine vergrößerte Filterfläche zum Abbau von Dekontaminationsrückständen erreicht werden.

Bei einer weiteren vorteilhaften Ausgestaltung der Erfindung kann vorgesehen sein, dass an der Schicht wenigstens ein Anschlussbereich zur, insbesondere modularen, Verkettung mehrerer Schichten ausgebildet wird.

Hierbei kann beispielsweise vorgesehen sein, dass Grundmodule, beispielsweise Schichten, der Katalysator-Anordnung modulartig hintereinandergeschaltet werden, um vorteilhafterweise die Abbaurate zum Abbau der Dekontaminationsrückstände zu vervielfachen.

Bei einer weiteren vorteilhaften Ausgestaltung der Erfindung kann vorgesehen sein, dass die Katalysator-Anordnung gemeinsam mit einem Rahmen und/oder einem Anschluss gefertigt wird.

Der Anschluss kann dabei beispielsweise ein fluiddichter, insbesondere gasdichter, Anschluss sein, der mit dem Rahmen und/oder der Katalysator-Anordnung verbunden ist.

Besonders vorteilhaft kann somit beispielsweise eine Formstabilität der gesamten Katalysator-Anordnung erreicht werden.

Ferner kann der Anschluss beispielsweise eine Dichtung zum Abdichten gegen davor und/oder daneben und/oder dahinterliegende Elemente der Katalysator-Anordnung sein. Bei den Elementen kann es sich beispielsweise um Befestigungsmittel und/oder Angriffspunkte für Befestigungs- und/oder Transportmittel et cetera handeln.

Alternativ oder zusätzlich sind zur Lösung der genannten Aufgabe erfindungsgemäß die Merkmale des nebengeordneten Anspruchs 9 vorgesehen. Erfindungsgemäß wird somit bei einem Verfahren zur Herstellung einer, beispielsweise der bereits erwähnten, Katalysator-Anordnung vorgeschlagen, dass das Trägergerüst von einem Trägermaterial gebildet und stoffschlüssig mit einem Filtermaterial verbunden wird.

Das Filtermaterial kann hierbei beispielsweise Bestandteil von einem HEPA-Filter sein. Ferner kann das Filtermaterial beispielsweise ein faserhaltiges Flächengebilde aus unterschiedlichen Materialien sein. Ferner kann das Filtermaterial beispielsweise ein gewebtes oder nicht gewebtes Filtermaterial sein.

Besonders vorteilhaft kann durch eine entsprechend stoffschlüssige Verbindung zwischen Trägermaterial und Filtermaterial erreicht werden, dass neben der katalytischen Reinigung des Luftstroms zusätzlich eine Filterung des Luftstroms erfolgt und dass dies durch einen Verbundwerkstoff zwischen Filtermaterial und Trägermaterial erreicht werden kann.

Ferner kann vorgesehen sein, dass das Trägermaterial eine, beispielsweise die bereits erwähnte, Filterwirkung und/oder eine, beispielsweise die bereits erwähnte, katalytisch bewirkende Schicht ausbildet, welche wiederum stoffschlüssig mit dem Filtermaterial verbunden wird. Falls die Schicht einen, beispielsweise den bereits erwähnten, Knickbereich aufweist, kann besonders vorteilhaft erreicht werden, dass das Filtermaterial gemeinsam mit dem Filtermaterial geknickt werden kann.

Alternativ oder zusätzlich kann vorgesehen sein, dass das Trägermaterial additiv auf das Filtermaterial aufgetragen wird.

Beispielsweise kann hierbei vorgesehen sein, dass das Trägermaterial während der additiven Fertigung direkt auf das Filtermaterial aufgetragen wird, wodurch wiederum eine besonders zeit- und kosteneffiziente Realisierung einer katalytischen Reinigung und gleichzeitigen Filterung des Luftstroms erreicht werden kann.

Bei einer weiteren vorteilhaften Ausgestaltung der Erfindung kann vorgesehen sein, dass das Filtermaterial auf ein, beispielsweise das bereits erwähnte, additiv gefertigtes Trägermaterial aufgelegt wird.

Besonders vorteilhaft kann hierdurch beispielsweise eine lösbare Verbindung zwischen Trägermaterial und Filtermaterial erreicht werden, um beispielsweise den Filter unabhängig von dem Trägermaterial wechseln und/oder herausnehmen zu können.

Allgemein kann auch vorgesehen sein, dass das Trägermaterial vor und/oder hinter dem Filtermaterial oder dass das Filtermaterial vor und/oder hinter dem Trägermaterial ausgebildet ist.

Alternativ oder zusätzlich sind zur Lösung der genannten Aufgabe erfindungsgemäß die Merkmale des nebengeordneten, auf eine Katalysator-Anordnung gerichteten Anspruchs vorgesehen. Insbesondere wird somit zur Lösung der genannten Aufgabe bei einer Katalysator-Anordnung, der ein vorzugsweise mehrschichtiges Trägergerüst aufweist, welches aus einem mit einem Haftvermittler versehenen, insbesondere vermischten, Trägermaterial und einem auf dem Trägermaterial aufgebrachten Katalysator gebildet ist, erfindungsgemäß vorgeschlagen, dass das Trägergerüst der Katalysator-Anordnung in einem additiven Verfahren hergestellt ist.

Bei Fertigung des mit dem Haftvermittler versehenen Trägergerüsts der Katalysator-Anordnung im Rahmen eines additiven Verfahrens können somit beispielsweise besonders vorteilhaft schnelle und automatisierte Prozessabläufe generiert werden. Darüber hinaus ergeben sich durch additive Verfahren, beispielsweise Schmelzschichtdruck- und/oder Resindruck- und/oder Selektivem-Lasersinter-Verfahren, vielfältige und anpassbare Gestaltungsmöglichkeiten des Trägergerüsts. Wird das mit dem Haftvermittler versehenen Trägergerüst der Katalysator-Anordnung beispielsweise in einem additiven Verfahren gefertigt, in welchem ein oder das Trägermaterial bis zum Schmelzpunkt erwärmt wird, kann somit beispielsweise besonders vorteilhaft eine stoffschlüssige Verbindung beider Komponenten erreicht werden, wenn der Haftvermittler vor und/oder während dem additiven Verfahren einem, beispielsweise dem bereits erwähnten, Trägermaterial beigegeben wird.

Insbesondere ist das Trägergerüst der Katalysator-Anordnung in einem bereits beanspruchten Verfahren hergestellt. Somit können die bereits erwähnten Vorteile erreicht werden.

Alternativ oder zusätzlich wird erfindungsgemäß vorgeschlagen, dass eine aus einer vorzugsweise linearen Filamentstruktur bestehende Schicht des Trägergerüsts zu wenigstens einer darauffolgenden nächsten Schicht kreuzend überlagert ist.

Besonders vorteilhaft kann durch eine solche kreuzende Überlagerung der Schichten des Trägergerüsts beispielsweise erreicht werden, dass sich somit eine möglichst kompakte Struktur des Trägergerüsts ergibt. Aufgrund der insbesondere linearen Filamentstrukturen können darüber hinaus auch große Querschnitte realisiert werden. Die kreuzende Überlagerung der Schichten erhöht ferner eine Kontaktfläche, die beispielsweise benötigt wird, um mittels des auf dem Trägergerüst aufgebrachten Katalysators, insbesondere einen die Katalysator-Anordnung, beispielsweise im Rahmen eines Umluft- und/oder Abluftverfahrens durchströmenden, vorzugsweise Dekontaminierungsrückstände enthaltenden Fluidstrom, beispielsweise einen Luftstrom, weitestgehend neutralisieren und die Rückstände chemisch abbauen zu können.

Bei den Schichten kann es sich beispielsweise um, insbesondere progressive, Druckschichten, beispielsweise mit zueinander unterschiedlichen Abmessungen, und/oder Objektschichten handeln.

Bei einer weiteren vorteilhaften Ausgestaltung der Erfindung kann vorgesehen sein, dass verschiedene miteinander überlagerte und/oder zueinander versetzte Schichten zumindest abschnittsweise deckungsgleich übereinanderliegend ausgebildet sind und dabei eine Ausgangsschicht ausbilden.

Dabei kann beispielsweise vorgesehen sein, dass die Abschnitte, in denen die Schichten deckungsgleich übereinanderliegend ausgebildet sind, vorbestimmt werden. Somit kann beispielsweise bestimmt werden, dass die Schichten derart ausgebildet sind und/oder gefertigt werden, dass sich die Abschnitte, in denen die Schichten deckungsgleich ausgebildet sind, nach jeder zweiten Schicht (nicht hierauf beschränkt) wiederholen.

Bei einer weiteren vorteilhaften Ausgestaltung kann vorgesehen sein, dass sich durch die kreuzende Überlagerung ein Versatz der Schichten bildet, wodurch sich in jedem Querschnitt der Katalysator-Anordnung Kanäle ausbilden.

Besonders vorteilhaft kann demgemäß beispielsweise ein, beispielsweise der bereits erwähnte, zu neutralisierende Rückstände enthaltende Fluidstrom über die Kanäle der gesamten Katalysator-Anordnung passieren.

Insbesondere bilden sich in jedem Querschnitt der Katalysator-Anordnung schikanenartige Kanäle aus. Besonders vorteilhaft kann durch die schikanenartigen Kanäle die Kontaktfläche der Katalysator-Anordnung vergrößert und die Wahrscheinlichkeit, dass ein, beispielsweise der bereits erwähnte, die Katalysator-Anordnung durchströmender und/oder diesen passierender Fluidstrom den Katalysator kontaktiert, erhöht werden.

Bei einer weiteren vorteilhaften Ausgestaltung der Erfindung kann vorgesehen sein, dass das Trägergerüst Kanäle ausbildet, die entlang einer Strömungsrichtung eines durch die Kanäle strömenden Gases Richtungsänderungen aufweisen.

Mittels dieser Richtungsänderungen kann beispielsweise eine kontrollierte Umlenkung und/oder Turbulenz des strömenden Gases erreicht werden. Auch hierdurch kann beispielsweise vorteilhaft eine (Flächen-)Kontaktierung des strömenden Gases mit dem Katalysator der Katalysator-Anordnung erhöht werden, da somit ein "Aufprallen" des strömenden Gases an Stellen der Richtungsänderung(en) der Katalysator-Anordnung erzwungen wird. Das strömende Gas kann dabei beispielsweise ein, beispielsweise der bereits erwähnte, Fluidstrom, insbesondere Luftstrom, sein, der insbesondere Dekontaminationsrückstände, insbesondere Wasserstoffperoxid, enthält, die mit der Katalysator-Anordnung chemisch, beispielsweise in einem kontrollierten Containment, abgebaut werden können.

Vorzugsweise bildet das Trägergerüst Kanäle aus, die entlang der Strömungsrichtung des durch die Kanäle strömenden Gases Richtungsänderungen von wenigstens 80°, insbesondere wenigstens 90°, aufweisen.

Solche abrupten Richtungsänderungen führen, wie bereits erwähnt, vorteilhafterweise zu einer entsprechend abrupten Änderung der Strömungsrichtung des strömenden Gases, sodass möglichst alle Gaspartikel des strömenden Gases die Katalysator-Anordnung kontaktieren.

Bei einer weiteren vorteilhaften Ausgestaltung der Erfindung kann vorgesehen sein, dass sich ein Vorzeichen des Versatzes der Schichten entlang des Querschnitts wenigstens einmal umkehrt.

Besonders vorteilhaft können somit, beispielsweise mittels Schmelzschicht- und/oder Resin- und/oder Selektivem-Lasersinter-Verfahren, bereits beanspruchte Richtungsänderungen der Kanäle des Trägergerüsts entlang der Strömungsrichtung des durch die Kanäle strömenden Gases problemlos gefertigt werden. Als "Umkehrung des Vorzeichens des Versatzes der Schichten" kann hierbei beispielsweise eine entlang einer, beispielsweise der bereits erwähnten, Strömungsrichtung eines, beispielsweise des bereits erwähnten, durch die Kanäle strömenden Gases entsprechende wechselnde Strömungsquerschnittsverengung eines Kanalabschnittes verstanden werden, dem eine Strömungsquerschnittserweiterung eines daran angrenzenden Kanalabschnittes folgt. Hierdurch wird, da die Strömung des strömenden Gases den Richtungsänderungen der Kanäle folgt, beispielsweise auch die Strömungsrichtung des strömenden Gases, im Vergleich zu einer geradlinigen Strömungsrichtung, beeinflusst und/oder umgekehrt.

Bei einer weiteren vorteilhaften Ausgestaltung kann vorgesehen sein, dass das Trägermaterial reaktanzbeständig, vorzugsweise wasserstoffperoxidbeständig und/oder ozonbeständig, ist.

Ein besonderer Vorteil besteht dabei darin, dass das Trägermaterial, beispielsweise wenn mittels der Katalysator-Anordnung Wasserstoffperoxid abgebaut werden soll, unbeschädigt bleibt und die gesamte Katalysator-Anordnung, insbesondere das Trägergerüst der Katalysator-Anordnung, somit langlebiger ist.

Eine weitere vorteilhafte Ausgestaltung der Erfindung kann vorsehen, dass der Haftvermittler und das Trägermaterial einen Mehrkomponentenwerkstoff bilden.

Der Haftvermittler kann dabei beispielsweise eine Substanz sein, die eine Oberflächenrauigkeit des Trägermaterial erhöht, während das Trägermaterial beispielsweise ein mittels additiver Verfahren verarbeitbarer Werkstoff ist. Vorteilhaft ist, wenn der Haftvermittler dem Trägermaterial beispielsweise vor und/oder während des additiven Verfahrens zur Herstellung des Trägergerüsts beigegeben wird und somit ein Mehrkomponentenwerkstoff gebildet ist, der wiederum die Basis des Trägermaterials bildet. Das durch diesen Mehrkomponentenwerkstoff gefertigte Trägergerüst bietet schließlich die kombinierten Vorteile beider Materialeigenschaften. Die Materialeigenschaften des Trägergerüsts sind somit, beispielsweise durch Variierung von Gewichtsprozenten der Komponenten, an unterschiedliche Anforderungen adaptierbar.

Bei einer weiteren vorteilhaften Ausgestaltung der Erfindung kann vorgesehen sein, dass das Trägergerüst mittels Schmelzschichtdruck und/oder Resindruck und/oder Selektivem-Lasersinter-Druck gefertigt ist.

Diese additiven Verfahren bieten den hervorragenden Vorteil, dass beispielsweise unterschiedliche Trägergerüst-Querschnitte und/oder Anpassungen der Querschnitte an sich ändernde Anforderungen unkritisch realisiert werden können. Zudem bieten die genannten additive Verfahren ferner den Vorteil, dass die Trägergerüste aus unterschiedlichen Werkstoffen gefertigt werden können.

Bei einer weiteren vorteilhaften Ausgestaltung der Erfindung kann vorgesehen sein, dass das Trägermaterial des Trägergerüsts mit dem Katalysator beschichtet ist.

Der Katalysator bildet hierbei den Hauptbestandteil der gesamten Katalysator-Anordnung. Sobald der Katalysator auf dem Trägermaterial des Trägergerüsts aufgebracht, beziehungsweise das Trägermaterial des Trägergerüst mit dem Katalysator beschichtet ist, können die bereits genannten Vorteile zum Abbau verschiedener Rückstände, beispielsweise zum Abbau von Wasserstoffperoxid eines, beispielsweise des bereits genannten und/oder beanspruchten strömenden Gases, abgebaut werden.

Eine weitere vorteilhafte Ausgestaltung der Erfindung kann vorsehen, dass der Katalysator ein Metalloxid ist.

Mittels Metalloxiden können beispielsweise Wasserstoffperoxid enthaltende Dekontaminationsrückstände chemisch abgebaut werden. Vorteilhafterweise kann hierbei beispielsweise Wasserstoffperoxid innerhalb eines kontrollierten Containments, insbesondere Isolatoren, die vor einer Manipulation eines Medikaments insbesondere im Rahmen eines Dekontaminationsschrittes mit einem strömenden Gas, insbesondere mit Wasserstoffperoxid, durchströmt wurden, um verschiedene Komponenten innerhalb des Containments dekontaminieren zu können, beispielsweise im Rahmen eines Umluft- und/oder Abluftverfahrens abgebaut werden. Dies hat den Vorteil, dass die (dekontaminationsmittelfreie) Abluft gefahrenlos in die Umgebung, in welcher sich möglicherweise Personen aufhalten, abgegeben werden kann und/oder dass im Abluftbereich nicht dekontamintationsmittelbeständige Materialien eingesetzt werden müssen. Zusätzlich oder alternativ wird eine Reaktion eines, beispielsweise des bereits erwähnten, Medikaments mit dem beispielhaft genannten Wasserstoffperoxid verhindert.

Insbesondere kann vorgesehen sein, dass der Katalysator ein Manganoxid ist.

Bei einer weiteren vorteilhaften Ausgestaltung der Erfindung kann vorgesehen sein, dass der Haftvermittler eine Oberflächenrauigkeit des Trägermaterials erhöht.

Dies kann beispielsweise durch keramische und/oder mineralische und/oder metallische Partikel oder dergleichen Strukturen erreicht werden und bietet den Vorteil, dass eine auf das Trägermaterial aufgebrachte Katalysatorbeschichtung besser auf dem Trägermaterial des Trägergerüsts anhaftet.

Bei einer weiteren vorteilhaften Ausgestaltung kann vorgesehen sein, dass wenigstens eine Schicht einen Anschlussbereich ausbildet.

Besonders vorteilhaft können somit die weiter oben bereits beschriebenen Vorteile realisiert werden, wie beispielsweise eine, beispielsweise die bereits erwähnte, modulare Verkettung verschiedener Grundmodule, wobei ein Grundmodul von einer Schicht gebildet sein kann.

Bei einer weiteren vorteilhaften Ausgestaltung der Erfindung kann vorgesehen sein, dass das Trägergerüst mit einem Rahmen verbunden und/oder in den Rahmen eingespannt ist. Somit kann auf einfache Weise eine Montage als Modul erreichbar sein.

Besonders vorteilhaft kann hierdurch die Formstabilität der Katalysator-Anordnung erhöht werden.

Bei einer weiteren vorteilhaften Ausgestaltung der Erfindung kann vorgesehen sein, dass die Katalysator-Anordnung über einen fluiddichten, insbesondere gasdichten, Anschluss mit dem Rahmen verbunden ist. Somit kann auf einfache Weise ein unerwünschtes Austreten ungereinigter Substanzen vermindert oder vermieden werden.

Besonders vorteilhaft können somit beispielsweise verschiedene Komponenten direkt mit dem Anschluss verbunden werden.

Alternativ oder zusätzlich sind zur Lösung der genannten Aufgabe erfindungsgemäß die Merkmale des nebengeordneten Anspruchs 18 vorgesehen. Insbesondere wird wird somit zur Lösung der genannten Aufgabe bei einer Katalysator-Anordnung der eingangs beschriebenen Art erfindungsgemäß vorgeschlagen, dass eine, eine Filterwirkung und/oder katalytisch bewirkende, additiv hergestellte Schicht wenigstens einen Knickbereich ausbildet.

Bei dem Knickbereich kann es sich beispielsweise um den bereits beschriebenen Knickbereich handeln. Besonders vorteilhaft kann die Katalysator-Anordnung somit geknickt werden, wodurch sich wiederum die Kontaktfläche zwischen Luftstrom und Katalysator-Anordnung vorteilhafterweise vergrößern lässt.

Alternativ oder zusätzlich sind zur Lösung der genannten Aufgabe erfindungsgemäß die Merkmale des nebengeordneten Anspruchs 19 vorgesehen. Insbesondere wird somit zur Lösung der genannten Aufgabe bei einer Katalysator-Anordnung der eingangs beschriebenen Art erfindungsgemäß vorgeschlagen, dass das Trägergerüst von einem Trägermaterial gebildet und stoffschlüssig mit einem Filtermaterial verbunden ist.

Besonders vorteilhaft kann somit beispielsweise erreicht werden, dass das Trägermaterial gemeinsam mit dem Filtermaterial geknickt werden kann, falls das Trägermaterial eine Schicht ausbildet, die einen, beispielsweise die bereits erwähnte, Knickbereich aufweist.

Ferner ist vorteilhaft, dass zwischen Trägermaterial und Filtermaterial ein Verbundwerkstoff erzeugt ist, über den ein, beispielsweise der bereits erwähnte, Luftstrom nicht nur katalysiert, sondern auch gefiltert werden kann.

Bei einer weiteren vorteilhaften Ausgestaltung der Erfindung kann vorgesehen sein, dass das Trägermaterial additiv auf ein, beispielsweise das bereits erwähnte, Filtermaterial aufgetragen ist.

Besonders vorteilhaft können somit die bereits beschrieben Vorteile erreicht werden.

Bei einer weiteren vorteilhaften Ausgestaltung der Erfindung kann vorgesehen sein, dass ein, beispielsweise das bereits erwähnte, Filtermaterial auf ein, beispielsweise das bereits erwähnte, additiv gefertigtes Trägermaterial aufgelegt ist.

Dabei kann beispielsweise vorgesehen sein, dass das Trägermaterial vor und/oder hinter dem Filtermaterial oder dass das Filtermaterial vor und/oder hinter dem Trägermaterial ausgebildet ist.

Alternativ oder zusätzlich sind zur Lösung der genannten Aufgabe erfindungsgemäß die Merkmale des nebengeordneten, auf eine Verwendung einer bereits beanspruchten Katalysator-Anordnung zum Abbau von Dekontaminationsrückständen innerhalb eines kontrollierten Containments, insbesondere eines Isolators und/oder einer Sterilisationseinrichtung, insbesondere einer Elektronenstrahl-Sterilisationseinrichtung, während eines Umluft- und/oder Abluftverfahrens gerichteten Anspruchs vorgesehen.

Die Elektronenstrahl-Sterilisationseinrichtung kann beispielsweise ein "E-Beam" sein. Bevorzugt kann sein, wenn beispielsweise der "E-Beam" und/oder der Isolator eine Befülleinrichtung, insbesondere zum Befüllen pharmazeutischer Behältnisse, Spritzen et cetera enthält.

Die Katalysator-Anordnung kann sich dabei vorzugsweise in einem Umluft- und/oder Abluftstrang des kontrollierten Containments befinden.

Besonders vorteilhaft können hierdurch die bereits erwähnten Vorteile der Katalysator-Anordnung realisiert werden. Das Umluft- und/oder Abluftverfahren bietet zudem den Vorteil, dass die Dekontaminationsrückstände in Richtung der Katalysator-Anordnung getrieben und/oder geleitet und somit über diesen abgebaut werden können. Es entsteht somit ein die Dekontaminationsrückstände enthaltendes, strömender Fluidstrom, beispielsweise ein die Dekontaminationsrückstände enthaltendes, strömendes Gas.

Insbesondere wird die bereits beanspruchte Katalysator-Anordnung zum Abbau von Wasserstoffperoxid verwendet.

Alternativ oder zusätzlich sind zur Lösung der genannten Aufgabe erfindungsgemäß die Merkmale des nebengeordneten, auf eine Luftaufbereitungsvorrichtung gerichteten Anspruchs vorgesehen. Insbesondere wird somit zur Lösung der genannten Aufgabe bei einer Luftaufbereitungsvorrichtung, die eine bereits beanspruchten Katalysator-Anordnung aufweist erfindungsgemäß vorgeschlagen, dass die Luftaufbereitungsvorrichtung dazu ausgebildet ist, einen Dekontaminationsrückstände enthaltenden Fluidstrom während eines Umluft- und/oder Abluftverfahrens durch die Katalysator-Anordnung zu leiten.

Besonders vorteilhaft können somit die bereits beschriebenen Vorteile der Katalysator-Anordnung realisiert werden.

Insbesondere ist die Luftaufbereitungsvorrichtung dazu ausgebildet, einen Wasserstoffperoxid enthaltenden Fluidstrom während des Umluft- und/oder Abluftverfahrens durch die Katalysator-Anordnung zu leiten.

Somit kann das Wasserstoffperoxid, insbesondere dann, wenn der Katalysator der Katalysator-Anordnung ein Metalloxid ist, abgebaut und die Luft innerhalb eines, beispielsweise des bereits erwähnten, kontrollierten Containments, insbesondere Isolators, beispielsweise zur Manipulation von Medikamenten, aufbereitet werden.

Die Erfindung wird nun anhand von Ausführungsbeispielen näher beschrieben, ist jedoch nicht auf die Ausführungsbeispiele beschränkt. Weitere Ausführungsbeispiele ergeben sich durch Kombination der Merkmale einzelner oder mehrerer Ansprüche untereinander und/oder mit einzelnen oder mehreren Merkmalen des Ausführungsbeispiels. Es zeigt, in jeweils stark vereinfachter Darstellung
- Fig. 1: eine zweidimensionale Darstellung einer Draufsicht einer erfindungsgemäßen Katalysator-Anordnung,
- Fig. 2: eine zweidimensionale Darstellung einer Katalysator-Anordnung gemäß Fig. 1 in einer Unteransicht,
- Fig. 3: ein kontrolliertes Containment mit Luftaufbereitungsvorrichtung, die eine erfindungsgemäße, mehrschichtige Katalysator-Anordnung hat und Darstellung eines Querschnittsprofils der mehrschichtigen Katalysator-Anordnung,
- Fig. 4: eine dreidimensionale Darstellung eines mehrschichtigen Trägergerüsts einer erfindungsgemäßen Katalysator-Anordnung mit Querschnittsdarstellung,
- Fig. 5: eine Darstellung kreuzender Überlagerungen von Schichten eines Trägergerüsts einer erfindungsgemäßen Katalysator-Anordnung,
- Fig. 6: eine Explosionsdarstellung eines mehrschichtigen Trägergerüsts einer erfindungsgemäßen Katalysator-Anordnung,
- Fig. 7: eine zweidimensionale Schnittdarstellung überlagerter Schichten eines Trägergerüsts einer erfindungsgemäßen Katalysator-Anordnung mit schikanenartigen Kanälen und ein durch diese strömenden Gases,
- Fig. 8: eine dreidimensionale Darstellung einer Schicht der Katalysator-Anordnung mit drei Knickbereichen,
- Fig. 9: eine dreidimensionale Darstellung einer Schicht der Katalysator-Anordnung nach Fig. 8 in einem geknickten Zustand,
- Fig. 10: eine dreidimensionale Darstellung einer Schicht der Katalysator-Anordnung mit zwei Knickbereichen,
- Fig. 11: eine dreidimensionale Darstellung einer Schicht der Katalysator-Anordnung nach Fig. 10 in einem geknickten Zustand,
- Fig. 12: eine zweidimensionale Schnittdarstellung eines Trägermaterials und vor dem Trägermaterial ausgebildetem Filtermaterial,
- Fig. 13: eine zweidimensionale Schnittdarstellung eines Trägermaterials und hinter dem Trägermaterial ausgebildetem Filtermaterial,
- Fig. 14: eine zweidimensionale Schnittdarstellung eines Trägermaterials mit vor und hinter dem Trägermaterial ausgebildetem Filtermaterial,
- Fig. 15: eine zweidimensionale Schnittdarstellung eines Filtermaterials mit vor und hinter dem Filtermaterial ausgebildetem Trägermaterial.

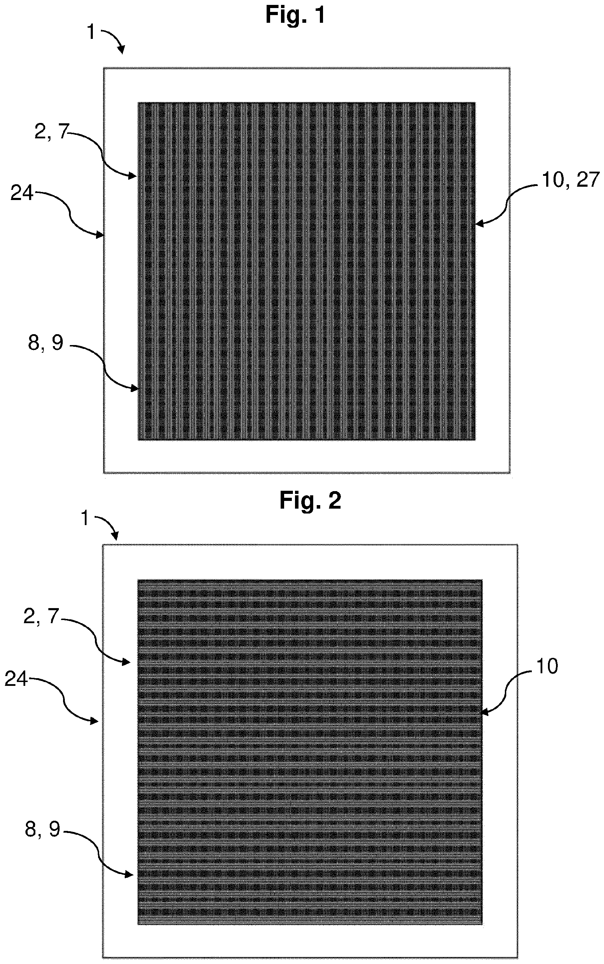

Fig. 1 und Fig. 2 zeigen eine im Ganzen mit 1 bezeichneten Katalysator-Anordnung in einer Draufsicht (Fig. 1) und in einer Unteransicht (Fig. 2). Die Katalysator-Anordnung 1 weist in den Ausführungsbeispielen ein in einem additiven Herstellungsverfahren gefertigtes, mehrschichtiges Trägergerüst 2 auf, welches aus einem mit einem Haftvermittler 7 versehenen, hier vermischten, wasserstoffperoxidbeständigen und ozonbeständigen Trägermaterial 8 und einem auf dem Trägermaterial 8 aufgebrachten, in diesem Fall nach der additiven Fertigung beschichteten, Katalysator 9 gebildet ist. Der Haftvermittler 7 ist hierbei stoffschlüssig mit dem Katalysator 9 verbunden.

Der Katalysator 9 ist in den gezeigten Ausführungsbeispielen von einem Metalloxid gebildet, jedoch nicht darauf beschränkt. Dies gilt ebenso für den Haftvermittler 7 und das Trägermaterial 8, die in den gezeigten Ausführungsbeispielen einen Mehrkomponentenwerkstoff bilden.

Das Trägergerüst 2 der Katalysator-Anordnung 1 ist in den gezeigten Ausführungsbeispielen additiv so hergestellt, dass eine stoffschlüssige Verbindung zwischen Haftvermittler 7 und Trägermaterial 8 homogen und gleichmäßig ist. Hierzu wird der Haftvermittler 7 dem Trägermaterial 8 vor und/oder während der additiven Fertigung, beispielsweise während eines Schmelzschichtdruckverfahrens und/oder eines Resindruckverfahrens und/oder eines Selektivem-Lasersinter-Verfahrens, beigegeben.

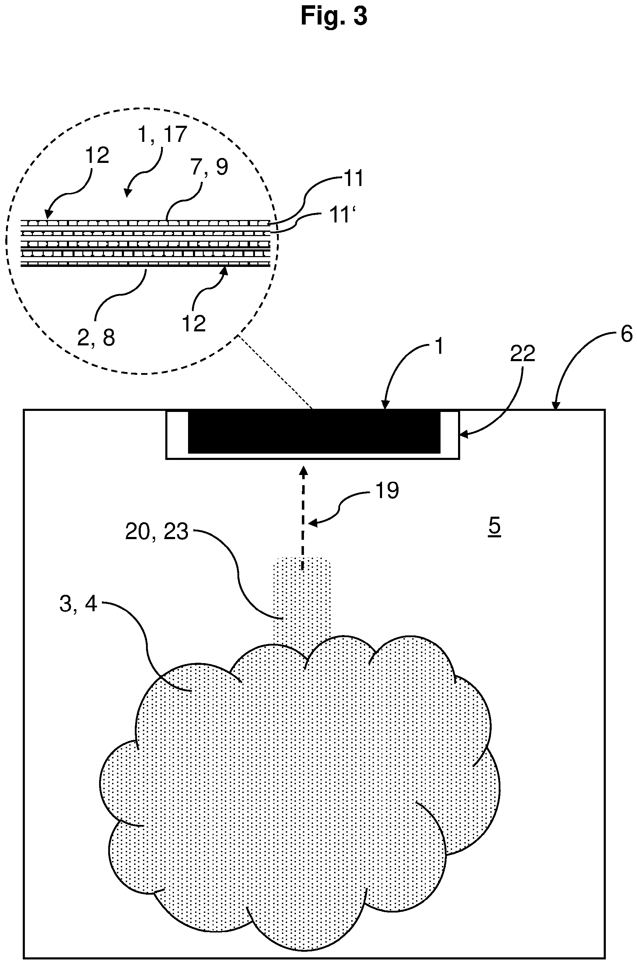

Das Trägergerüst 2 ist, zur Erreichung einer guten Formstabilität, in einem Rahmen 24 eingespannt. Ferner weist das Trägergerüst 2 der Katalysator-Anordnung 1 ein Muster 27 auf, welches dadurch entsteht, dass eine aus einer linearen Filamentstruktur 10 bestehenden Schicht 11 (siehe Fig. 3) zu wenigstens einer nachfolgenden Schicht 11' (siehe Fig. 3 ff.) kreuzend überlagert 15 ist. Es kann somit gesagt werden, dass das Trägergerüst 2 während der additiven Fertigung mehrschichtig durch lineare Filamentstrukturen 10 des Trägermaterials 8 gebildet und wobei jede Schicht 11 zueinander versetzt ausgebracht wird.

Fig. 3 zeigt eine zweidimensionale Prinzipdarstellung eines kontrollierten Containments 5, welches in diesem Ausführungsbeispiel als Isolator 6 ausgebildet ist. Funktionell und/oder konstruktiv zu den vorangehenden Ausführungsbeispielen gleichartige oder identische Bauteile und Funktionseinheiten sind mit denselben Bezugszeichen bezeichnet und nicht noch einmal gesondert beschrieben.

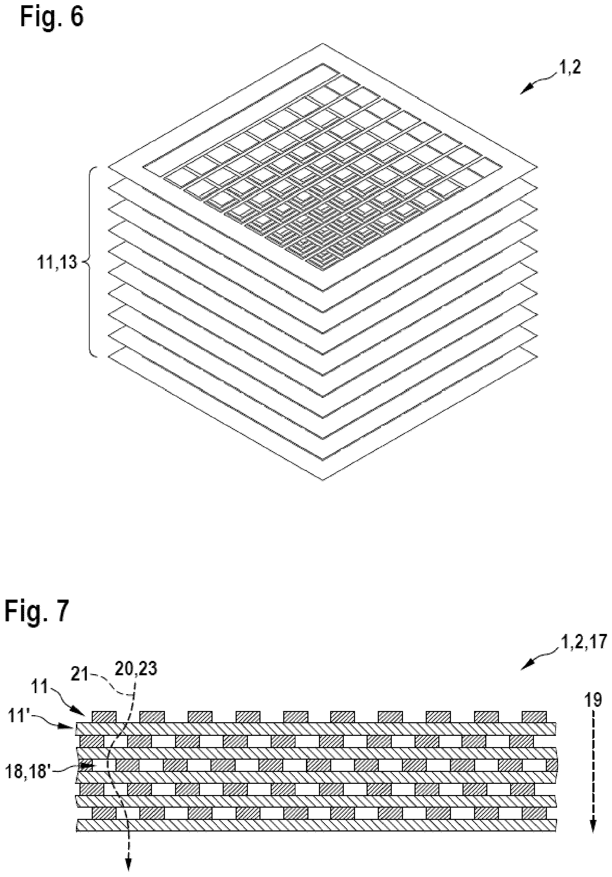

Es ist zu erkennen, dass die Katalysator-Anordnung 1 in dem kontrollierten Containment 5, beziehungsweise dem Isolator 6, als Bestandteil einer Luftaufbereitungsvorrichtung 22 ausgebildet ist. Somit werden mit der Luftaufbereitungsvorrichtung 22 über ein während eines Umluft- und/oder Abluftverfahrens entstehenden, strömenden Gases 20, beziehungsweise Fluidstroms 23, der wiederum Dekontaminationsrückstände 3, in dem gezeigten Ausführungsbeispiel Wasserstoffperoxid 4, aus dem kontrollierten Containment 5 enthält, über die Katalysator-Anordnung 1 geleitet und durch Reaktion der Dekontaminationsrückstände 3 mit dem Katalysator 9 des Trägergerüsts 2 abgebaut, wie in der Beschreibung zu Fig. 7 konkretisiert.

Ferner ist ein Querschnitt 17 des Trägergerüsts 2 der Katalysator-Anordnung 1 mit den Schichten 11, 11' und den Oberflächen 12 des Trägergerüsts 2 gezeigt. Diese Oberflächen 12 werden nach der additiven Fertigung des Trägergerüsts 2 chemisch so behandelt, dass der Haftvermittler 7, der, wie bereits erwähnt, dem Trägermaterial 8 beigegeben ist, freigelegt wird und somit eine Oberflächenrauigkeit des Trägermaterials 8 erhöht.

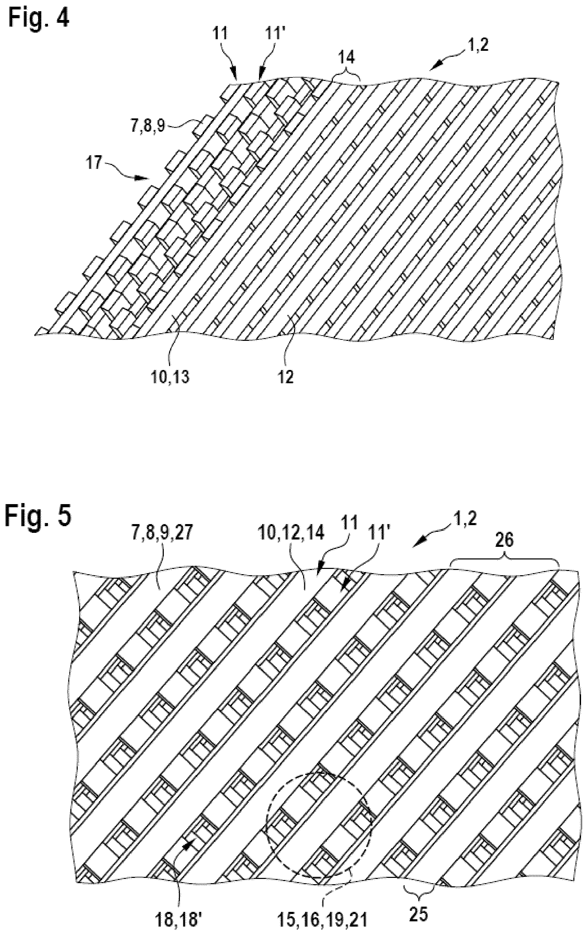

Fig. 4 und Fig. 5 zeigen, im Unterschied zu den vorangegangenen Asuführungsbeispiel, einen dreidimensionalen Querschnitt 17 (Fig. 4) des aus den linearen Filamentstrukturen 10 bestehenden Trägergerüsts 2 der Katalysator-Anordnung 1, sowie eine detailliertere Darstellung des Musters 27 des Trägergerüsts 2.

In dem gezeigten Ausführungsbeispiel ist nochmals gut zu erkennen, dass zwischen den Schichten 11, 11' ein durch die kreuzende Überlagerung 15 dieser Schichten 11, 11' entstehender Versatz 16 gebildet ist, wodurch sich in jedem Querschnitt 17 der Katalysator-Anordnung Kanäle 18, hier schikanenartige Kanäle 18', ausbilden, über die das in Fig. 3 gezeigte Gas 20, beziehungsweise der Fluidstrom 23, hindurchströmt. Es ist ferner ersichtlich, dass sich ein Vorzeichen des Versatzes 16 der Schichten 11, 11' entlang des Querschnitts 17 wenigstens einmal umkehrt.

Die Kanäle 18, 18` des Trägergerüsts 2 weisen, wie zusätzlich in dem Ausführungsbeispiel nach Fig. 7 näher dargestellt, entlang der Strömungsrichtung 19 des durch die Kanäle 18, 18` strömenden Gases 20 Richtungsänderungen 21, in dem gezeigten Ausführungsbeispiel Richtungsänderungen 21 von wenigstens 80°, auf.

Darüber hinaus sind in den Fig. 4 und 5 Maschen 14 dargestellt, die von der Filamentstruktur 10 gebildet sind. Die Maschen 14 sind durch ihre individuell wählbare Maschenbreite 25, den individuell wählbaren Maschenabstand 26 und/oder durch den Versatz 16 der Maschen 14 charakterisiert. Über diese Maße der Maschen 14, wie auch über wenigstens ein Maß der in der Fig. 6 gezeigten Ebenen 13, die von den Schichten 11, 11' gebildet sind, ist eine Einstellung einer gewünschten Abbaurate und/oder eines Druckverlusts des durch das Trägergerüst 2 der Katalysator-Anordnung 1 geleiteten Fluidstroms 23 (Vergleich Fig. 3 und 7) ermöglicht. In dem gezeigten Ausführungsbeispiel beträgt der Versatz 16 einer gleichgerichteten Masche 14 200 µm, die Maschenbreite 25 und der Maschenabstand 26 400 µm, sind jedoch nicht auf diese individuell gewählten Maße beschränkt.

Fig. 6 zeigt im Unterschied zu den vorangegangenen Ausführungsbeispielen eine Explosionsdarstellung einer Katalysator-Anordnung mit 10 Ebenen 13, wobei jede Ebene 13 von einer Schicht 11 gebildet ist. In dem gezeigten Ausführungsbeispiel beträgt die Höhe einer Ebene 200 µm.

Fig. 7 zeigt schließlich eine zweidimensionale Darstellung eines Querschnitts 17 des Trägergerüsts 2 der Katalysator-Anordnung, wobei durch die durch den Versatz 16 der Schichten 11, 11' schikanenartige Kanäle 18' gebildet sind. Durch diese schikanenartigen Kanäle 18' strömt im Rahmen eines Umluft- und/oder Abluftverfahren (siehe Fig. 3) entlang einer Strömungsrichtung 19 ein Fluidstrom 23, beziehungsweise ein strömendes Gas 20. Dieses strömende Gas 20, beziehungsweise der Fluidstrom 23, erfährt aufgrund des Versatzes 16 der Schichten 11, 11' Richtungsänderungen 21, wodurch erwirkt wird, dass der Dekontaminationsrückstände 3 (siehe Fig. 3) enthaltende Fluidstrom 23 das Trägergerüst 2 in jedem Falle kontaktiert. Somit werden diese Dekontaminationsrückstände 3, wie in der Beschreibung zu Fig. 3 bereits erwähnt beispielsweise Wasserstoffperoxid 4, aufgrund der Reaktion der Dekontaminationsrückstände 3 mit dem Katalysators 9 (siehe Fig. 3), welches auf dem mit dem Haftvermittler 7 versehenen Trägermaterial 8 des Trägergerüsts 2 aufgebracht ist, abgebaut wird.

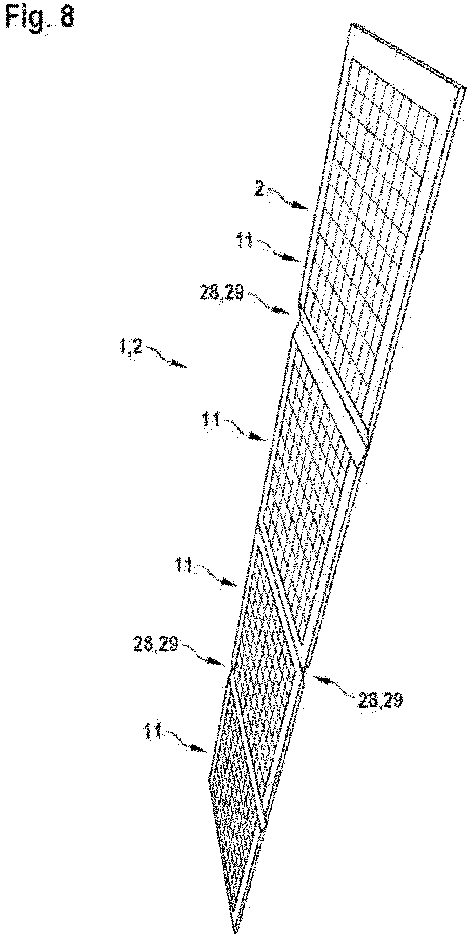

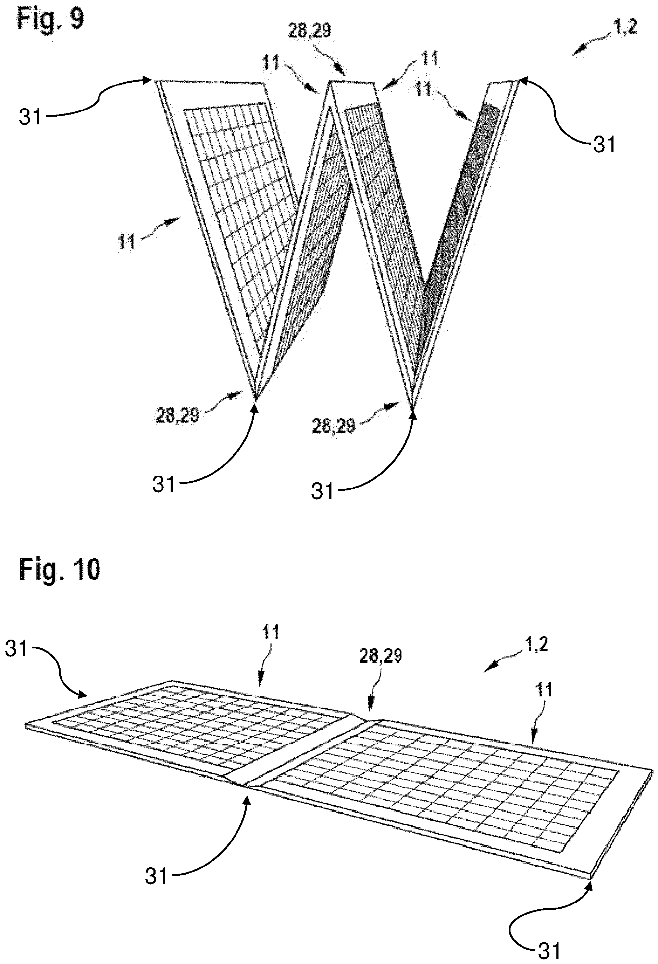

Fig. 8 zeigt eine dreidimensionale Darstellung eine Schicht 11 der Katalysator-Anordnung 1. Die Schicht 11 hat im gezeigten Ausführungsbeispiel drei Knickbereiche 18, über die die Schicht 11 nach der additiven Fertigung geknickt werden kann, wie in Fig. 9 schematisch dargestellt.

Es kann somit gesagt werden, dass eine, eine Filterwirkung und/oder katalytisch bewirkende Schicht 11 in einem additiven Verfahren hergestellt wird, wobei wenigstens ein Knickbereich 28, hier drei Knickbereiche 28 in Form von Falzen 29, ausgebildet werden und wobei die Schicht 11 in dem Knickbereich nach dem additiven Verfahren geknickt wird, wie in Fig. 9 veranschaulicht.

Ferner wird an der Schicht 11 wenigstens ein Anschlussbereich 31 zur, insbesondere modularen, Verkettung mehrerer Schichten 11, 11' ausgebildet.

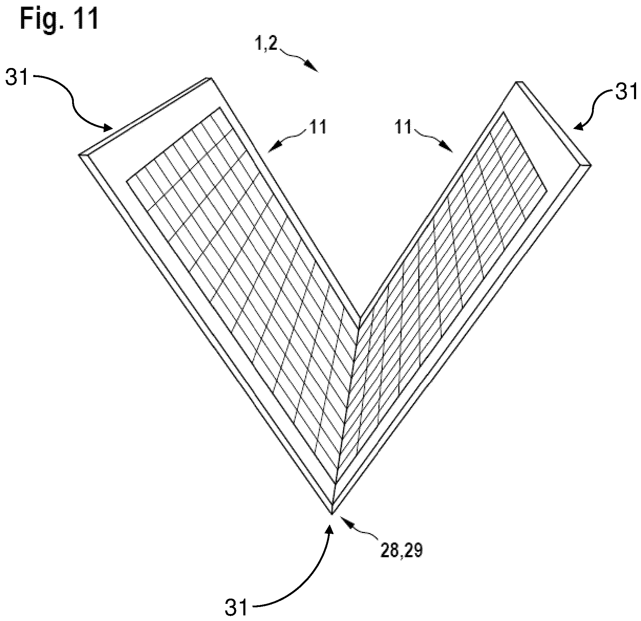

Fig. 10 und 11 zeigen im Unterschied zu den Ausführungsbeispielen nach Fig. 8 und Fig. 9 eine Schicht 11 mit leidglich einem Knickbereich 28.

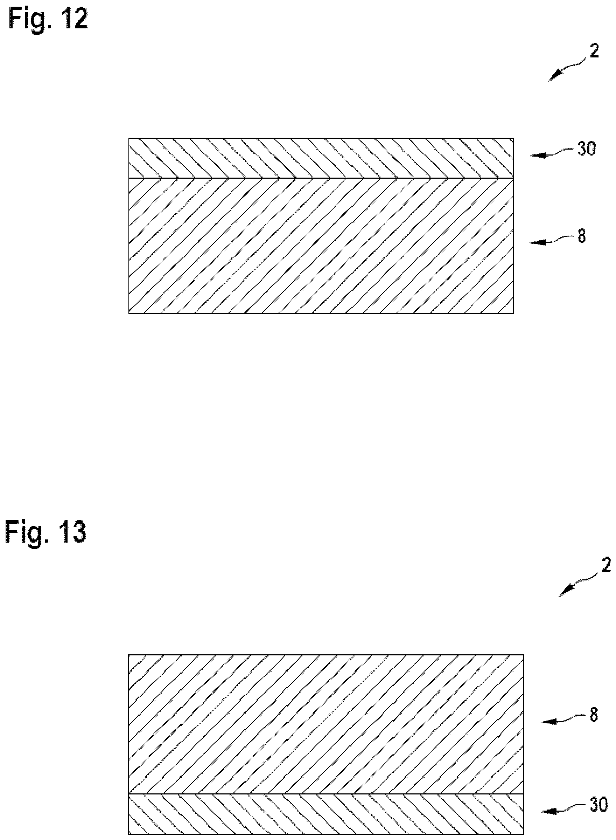

Fig. 12-15 zeigen eine schematische, zweidimensionale Schnittdarstellung einer stoffschlüssigen Verbindung zwischen einem Filtermaterial 30 und dem Trägermaterial 8.

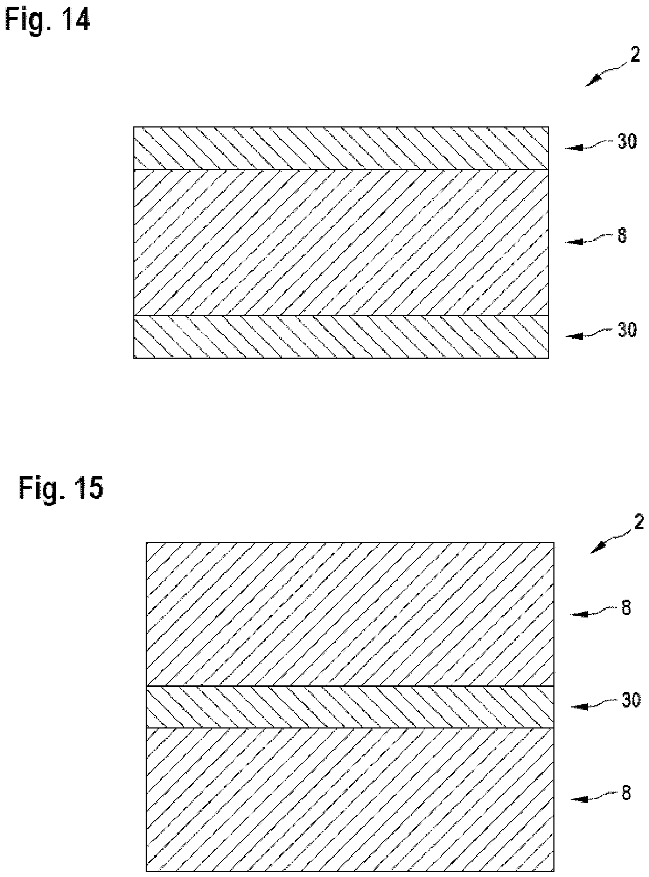

Fig. 12 zeigt hierbei, dass das Trägermaterial 8 hinter dem Filtermaterial 30 aufgelegt und/oder aufgetragen ist. Fig. 13 zeigt, dass das Trägermaterial 8 vor dem Filtermaterial 30 aufgelegt und/oder aufgetragen ist. Fig. 14 zeigt, dass das Filtermaterial 30 vor und hinter dem Trägermaterial 8 aufgetragen und/oder aufgelegt ist. Fig. 15 zeigt, dass das Trägermaterial 8 vor und hinter dem Filtermaterial 30 aufgetragen und/oder aufgebracht ist.

In nicht gezeigten Ausführungsbeispielen wird die Katalysator-Anordnung 1 gemeinsam mit einem Rahmen 24 und/oder einem Anschluss, der eine Anschlussschnittstelle für verschiedene Komponenten definiert, gefertigt. Ferner ist das Trägergerüst 2 in einem nicht näher gezeigten Ausführungsbeispiel mit dem Rahmen 24 über einen fluiddichten, insbesondere gasdichten, Anschluss verbunden und/oder in dem Rahmen 24 eingespannt.

Erfindungsgemäß wird somit bei einem Verfahren zur Herstellung einer Katalysator-Anordnung 1, der ein Trägergerüst 2 aufweist, wobei die Katalysator-Anordnung 1 zum Abbau von Dekontaminationsrückständen 3, insbesondere von Wasserstoffperoxid 4, in einem kontrollierten Containment 5, insbesondere einem Isolator 6, ausgebildet ist, vorgeschlagen, dass das Trägergerüst 2 der Katalysator-Anordnung 1 additiv gefertigt wird, wobei das Trägergerüst 2 aus einem mit einem Haftvermittler 7 versehenen, insbesondere homogen und/oder gleichmäßig vermischten Trägermaterial 8 besteht, wobei das Trägergerüst 2 der Katalysator-Anordnung 1 aus vorzugsweise linearen Filamentstrukturen 10 bestehenden Schichten 11, 11' gebildet ist, wobei jede Schicht 11 einer nachfolgenden Schicht 11' kreuzend überlagert 15 ist und wobei die Katalysator-Anordnung 1 insbesondere als Bestandteil einer Luftaufbereitungsvorrichtung 22 ausgebildet ist.

### Bezugszeichenliste

- 1: Katalysator-Anordnung
- 2: Trägergerüst
- 3: Dekontaminationsrückstände
- 4: Wasserstoffperoxid
- 5: Containment
- 6: Isolator
- 7: Haftvermittler
- 8: Trägermaterial
- 9: Katalysator
- 10: Filamentstruktur
- 11: Schicht
- 11': nachfolgende Schicht
- 12: Oberfläche
- 13: Ebene
- 14: Masche
- 15: kreuzende Überlagerung
- 16: Versatz
- 17: Querschnitt
- 18: Kanäle
- 18`: schikanenartige Kanäle
- 19: Strömungsrichtung
- 20: strömendes Gas
- 21: Richtungsänderung
- 22: Luftaufbereitungsvorrichtung
- 23: Fluidstrom
- 24: Rahmen
- 25: Maschenbreite
- 26: Maschenabstand
- 27: Muster
- 28: Knickbereich
- 29: Falz
- 30: Filtermaterial
- 31: Anschlussbereich

## Patentansprüche

1. Verfahren zur Herstellung einer Katalysator-Anordnung (1), die ein Trägergerüst (2) aufweist, wobei die Katalysator-Anordnung (1) zum Abbau von Dekontaminationsrückständen (3), insbesondere von Wasserstoffperoxid (4) und/oder Ozon, in einem kontrollierten Containment (5), insbesondere einem Isolator (6), ausgebildet ist, **dadurch gekennzeichnet, dass** das Trägergerüst (2) der Katalysator-Anordnung (1) durch ein mit einem Haftvermittler (7) versehenen, insbesondere vermischten, Trägermaterial (8) additiv gefertigt wird.

2. Verfahren nach dem vorangehenden Anspruch, **dadurch gekennzeichnet, dass** eine Verbindung, insbesondere eine stoffschlüssige Verbindung, zwischen Haftvermittler (7) und Trägermaterial (8) homogen und/oder gleichmäßig ist und/oder dass der Haftvermittler (7) dem Trägermaterial (8), vor und/oder während dem additiven Verfahren beigegeben wird.

3. Verfahren nach einem der vorangehenden Ansprüche, **dadurch gekennzeichnet, dass** die additive Fertigung, durch welches das Trägergerüst (2) gebildet wird, ein Schmelzschichtdruckverfahren und/oder ein Resindruckverfahren und/oder ein Selektives-Lasersinter-Verfahren ist und/oder dass das Trägermaterial (8) nach der additiven Fertigung mit einem Katalysator (9) beschichtet wird.

4. Verfahren nach einem der vorangehenden Ansprüche, **dadurch gekennzeichnet, dass** der Haftvermittler (7) stoffschlüssig mit dem oder einem Katalysator (9) verbunden wird und/oder dass das Trägergerüst (2) während der additiven Fertigung mehrschichtig durch lineare Filamentstrukturen (10) des Trägermaterials (8) gebildet wird, insbesondere wobei wenigstens zwei Schichten (11) gegeneinander versetzt aufgebracht werden und/oder jede Schicht (11) zueinander und/oder zumindest zu einer vorhergehenden und/oder nachfolgenden Schicht (11`), versetzt aufgebracht wird.

5. Verfahren nach einem der vorangehenden Ansprüche, **dadurch gekennzeichnet, dass** eine Oberfläche (12) des Trägermaterials (8) nach der Fertigung chemisch so behandelt wird, dass der Haftvermittler (7), der dem Trägermaterial (8) beigegeben ist, freigelegt wird.

6. Verfahren zur Herstellung einer Katalysator-Anordnung (1) nach dem Oberbegriff von Anspruch 1 oder nach einem der vorangehenden Ansprüche, **dadurch gekennzeichnet, dass** zur Einstellung einer gewünschten Abbaurate und/oder eines Druckverlusts eines die Dekontaminationsrückstände (3) enthaltenden und die Katalysator-Anordnung (1) passierenden Fluidstroms (23) ein Maß für wenigstens eine Ebene (13) und/oder wenigstens eine Masche (14) individuell gewählt wird.

7. Verfahren zur Herstellung einer Katalysator-Anordnung (1), insbesondere nach dem Oberbegriff von Anspruch 1 oder nach einem der vorangehenden Ansprüche, wobei eine, eine Filterwirkung und/oder katalytisch bewirkende Schicht (11), in einem additiven Verfahren hergestellt wird, wobei wenigstens ein Knickbereich (28) ausgebildet wird und wobei die Schicht (11) in dem Knickbereich (28) nach dem additiven Verfahren geknickt wird.

8. Verfahren zur Herstellung einer Katalysator-Anordnung (1) nach einem der vorangehenden Ansprüche, **dadurch gekennzeichnet, dass** an der Schicht (11) wenigstens ein Anschlussbereich (31) zur, insbesondere modularen, Verkettung mehrerer Schichten (11, 11'), ausgebildet wird und/oder dass die Katalysator-Anordnung (1) gemeinsam mit einem Rahmen (24) und/oder einem Anschluss gefertigt wird.

9. Verfahren zur Herstellung einer Katalysator-Anordnung (1) nach dem Oberbegriff von Anspruch 1 oder nach einem der vorangehenden Ansprüche, **dadurch gekennzeichnet, dass** das Trägergerüst (2) von einem Trägermaterial (8) gebildet und stoffschlüssig mit einem Filtermaterial (30) verbunden wird.

10. Verfahren nach einem der vorangehenden Ansprüche, **dadurch gekennzeichnet, dass** das Trägermaterial (8) additiv auf das Filtermaterial (30) aufgetragen wird und/oder dass das Filtermaterial (30) auf das oder ein additiv gefertigtes Trägermaterial (8) aufgelegt wird.

11. Katalysator-Anordnung (1), die ein vorzugsweise mehrschichtiges Trägergerüst (2) aufweist, welches aus einem mit einem Haftvermittler (7) versehenen, insbesondere vermischten, Trägermaterial (8) und einem auf dem Trägermaterial (8) aufgebrachten Katalysator (9) gebildet ist, **dadurch gekennzeichnet, dass** das Trägergerüst (2) der Katalysator-Anordnung (1) in einem additiven Verfahren, insbesondere nach Anspruch 1, hergestellt ist und/oder dass eine aus einer vorzugsweise linearen Filamentstruktur (10) bestehende Schicht (11) des Trägergerüsts (2) zu wenigstens einer nachfolgenden Schicht (11') kreuzend überlagert (15) ist.

12. Katalysator-Anordnung (1) nach dem vorangehenden, auf eine Katalysator-Anordnung (1) gerichteten Anspruch, **dadurch gekennzeichnet, dass** sich durch die kreuzende Überlagerung (15) ein Versatz (16) der Schichten (11, 11') bildet, wodurch sich in jedem Querschnitt (17) der Katalysator-Anordnung (1) Kanäle (18), insbesondere schikanenartige Kanäle (18`), ausbilden und/oder dass verschieden miteinander überlagerte und/oder zueinander versetzte Schichten (11, 11') zumindest abschnittsweise deckungsgleich übereinanderliegend ausgebildet sind und dabei eine Ausgangsschicht (11") ausbilden.

13. Katalysator-Anordnung (1) nach einem der vorangehenden, auf eine Katalysator-Anordnung (1) gerichteten Ansprüche, **dadurch gekennzeichnet, dass** das Trägergerüst (2) Kanäle (18) ausbildet, die entlang einer Strömungsrichtung (19) eines durch die Kanäle (18) strömenden Gases (20) Richtungsänderungen (21), vorzugsweise Richtungsänderungen (21) von wenigstens 80°, insbesondere wenigstens 90°, aufweisen und/oder dass sich ein Vorzeichen des Versatzes (16) der Schichten (11, 11') entlang des Querschnitts (17) wenigstens einmal umkehrt.

14. Katalysator-Anordnung (1) nach einem der vorangehenden, auf eine Katalysator-Anordnung (1) gerichteten Ansprüche, **dadurch gekennzeichnet, dass** das Trägermaterial (8) reaktanzbeständig, vorzugsweise wasserstoffperoxidbeständig und/oder ozonbeständig, ist und/oder dass der Haftvermittler (7) und das Trägermaterial (8) einen Mehrkomponentenwerkstoff bilden.

15. Katalysator-Anordnung (1) nach einem der vorangehenden, auf eine Katalysator-Anordnung (1) gerichteten Ansprüche, **dadurch gekennzeichnet, dass** das Trägergerüst (2) mittels Schmelzschichtdruck und/oder Resindruck und/oder Selektivem-Lasersinter-Druck gefertigt ist und/oder dass das Trägermaterial (8) des Trägergerüsts (2) mit dem Katalysator (9) beschichtet ist und/oder dass der Katalysator (9) ein Metalloxid, insbesondere ein Manganoxid ist.

16. Katalysator-Anordnung (1) nach einem der vorangehenden, auf eine Katalysator-Anordnung (1) gerichteten Ansprüche, **dadurch gekennzeichnet, dass** der Haftvermittler (7) eine Oberflächenrauigkeit des Trägermaterials (8) erhöht und/oder dass wenigstens eine Schicht (11, 11') einen Anschlussbereich (31) ausbildet.

17. Katalysator-Anordnung (1) nach einem der vorangehenden, auf eine Katalysator-Anordnung (1) gerichteten Ansprüche, **dadurch gekennzeichnet, dass** das Trägergerüst (2) mit einem Rahmen (24) verbunden und/oder in den Rahmen (24) eingespannt ist und/oder dass der Katalysator-Anordnung (1) über einen fluiddichten, insbesondere gasdichten, Anschluss mit dem Rahmen (24) verbunden ist.

18. Katalysator-Anordnung (1) nach dem Oberbegriff von Anspruch 11 oder nach einem der vorangehenden Ansprüche, **dadurch gekennzeichnet, dass** eine, eine Filterwirkung und/oder katalytische bewirkende, additiv hergestellte Schicht (11), wenigstens einen Knickbereich (28) ausbildet.

19. Katalysator-Anordnung (1) nach dem Oberbegriff von Anspruch 11 oder nach einem der vorangehenden Ansprüche, **dadurch gekennzeichnet, dass** das Trägergerüst (2) von einem Trägermaterial (8) gebildet und stoffschlüssig mit einem Filtermaterial (30) verbunden ist.

20. Katalysator-Anordnung nach einem der vorangehenden Ansprüche, **dadurch gekennzeichnet, dass** das Trägermaterial (8) additiv auf das oder ein Filtermaterial (30) aufgetragen ist und/oder dass das oder ein Filtermaterial (30) auf das oder ein additiv gefertigten Trägermaterial (8) aufgelegt ist.

21. Verwendung eines Katalysator-Anordnung (1) nach einem der Ansprüche 11 bis 20 zum Abbau von Dekontaminationsrückständen (3), insbesondere zum Abbau von Wasserstoffperoxid (4) und/oder Ozon, innerhalb eines kontrollierten Containments (5), insbesondere eines Isolators (6) und/oder einer Sterilisationseinrichtung, insbesondere einer Elektronenstrahl-Sterilisationseinrichtung, während eines Umluft- und/oder Abluftverfahrens.

22. Luftaufbereitungsvorrichtung (22), die einen Katalysator-Anordnung (1) nach einem der Ansprüche 11 bis 20 aufweist, **dadurch gekennzeichnet, dass** die Luftaufbereitungsvorrichtung (22) dazu ausgebildet ist, einen Dekontaminationsrückstände (3) enthaltenden Fluidstrom (23), insbesondere einen Wasserstoffperoxid (4) enthaltenden Fluidstrom (23), während eines Umluft- und/oder Abluftverfahrens durch die Katalysator-Anordnung (1) zu leiten.
